# FASCICULE DE BREVET EUROPEEN

(11) **EP 3 252 307 B1**
(45) Date de publication et mention de la délivrance du brevet: **04.09.2019**
(21) Numéro de dépôt: 17173728.1
(22) Date de dépôt: 31.05.2017
(51) Int. Cl.: F04B 1/047, F03C 1/34, F03C 1/40, F03C 1/06

(54) **SYSTEME DE SELECTION COMPRENANT UN VERROUILLAGE AXIAL AMELIORE**
AUSWAHLSYSTEM, DAS EINE VERBESSERTE AXIALVERRIEGELUNG UMFASST
SELECTION SYSTEM COMPRISING IMPROVED AXIAL LOCKING

(30) Priorité: 01.06.2016 FR 1654958
(43) Date de publication de la demande: 06.12.2017
(73) Titulaire: Poclain Hydraulics Industrie, 60410 Verberie (FR)
(72) Inventeur: BONNARD, Loic, 60410 VERBERIE (FR); COSTAZ, Dominique, 60410 VERBERIE (FR); VIARD, Julien, 60410 VERBERIE (FR)
(74) Mandataire: Gilbey, Vincent

(56) Documents cités:
- EP-A1- 0 969 205
- EP-A2- 1 058 002
- EP-A2- 2 980 405
- WO-A1-2011/048327
- FR-A- 1 380 823
- FR-A1- 2 194 893

## Description

La présente invention concerne le domaine des appareils hydrauliques, et plus précisément les tiroirs de sélection et de freinage pour les appareils hydrauliques.

### ETAT DE L'ART

Les systèmes de commande de circuits hydrauliques font usage de tiroirs de sélection et de freinage afin de piloter l'alimentation des différents composants du circuit hydraulique considéré.

De manière connue, les tiroirs de sélection comportent un élément qui coulisse dans un alésage comportant des gorges reliées à des conduits, pour mettre en relation de manière sélective des conduit d'alimentation d'un appareil hydraulique et des conduits menant aux pistons d'un moteur.
Ces tiroirs de sélection permettent de sélectionner des sous cylindrées de l'appareil hydraulique. En particulier, ces tiroirs permettent de sélectionner ou de contourner des sous cylindrées de machines hydrauliques pour changer la cylindrée active totale de la machine. Cette sélection est utilisée particulièrement sur les machines à pistons radiaux et came multilobes lors de l'entrainement ou du freinage.
Sur de telles machines, le tiroir de sélection est placé entre le distributeur et les conduits d'alimentation de la machine.
Le document WO 2011/048327 présente ainsi un tiroir de sélection connu.

De manière connue, les différentes combinaisons de pistons et de lobes actifs définissent des sous cylindrées (également qualifiés de moteurs élémentaires pour la machine hydraulique), qui sont des sous parties de la machine hydraulique, qui sont capables par leur combinaison de pistons et de lobes actifs, et leur symétrie, de tourner par elles-mêmes de manière homocinétique pour un débit constant. Les sous cylindrées peuvent se définir par groupes de lobes, ou par groupes de pistons

L'arrêt axial des tiroirs de sélection est typiquement réalisé au moyen de circlips, de coquilles cylindriques ou de joncs.
Ces différents moyens d'arrêt axial doivent répondre à plusieurs problématiques, notamment réaliser une reprise d'efforts élevés dans un encombrement réduit, et autoriser un degré de liberté entre les différents éléments du tiroir de sélection afin de supporter les désaxages éventuels des différentes portées de puits associés au tiroir.

Cependant, les solutions connues présentent chacune des inconvénients vis-à-vis de ces problématiques. Ces solutions connues présentent notamment l'inconvénient que les pièces d'arrêt ne sont pas sollicitées selon leur axe de plus grande résistance. En effet, du fait des impératifs dimensionnels liés au montage des pièces d'arrêt et de la nécessité de les segmenter en plusieurs pièces afin de permettre leur montage autour d'un arbre, ces dernières présentent un jeu fonctionnel important, entrainant une flexion et une application ponctuelle des efforts via des contacts ponctuels provoquant une rupture des pièces.

La présente invention vise ainsi à répondre au moins partiellement à ces problématiques.

### PRESENTATION DE L'INVENTION

A cet effet, la présente invention propose un système de sélection, comprenant
- une douille définissant un logement interne s'étendant selon une direction longitudinale,
- une tige de liaison disposée dans ledit logement interne, et s'étendant selon la direction longitudinale,
- un tiroir de sélection monté coulissant dans le logement interne, autour de la tige de liaison,
   la tige de liaison étant montée fixe en translation selon la direction longitudinale par rapport à la douille via des moyens d'arrêt,
   caractérisé en ce que les moyens d'arrêt comprennent
- une base présentant une symétrie de révolution et comprenant une portion conique,
- une coquille comprenant deux portions de coquille comprenant chacune une portion conique configurée pour venir en appui plan contre la portion conique de la base.

La base forme typiquement un anneau dont une face interne est biseautée de manière à former la portion conique, la portion conique de la coquille étant adaptée pour venir en appui plan contre ladite portion conique de la base.

La base est typiquement en appui contre un premier épaulement formé sur la douille, et la coquille est en appui contre un second épaulement formé sur la tige de liaison.
Le système peut alors comprendre en outre une rondelle d'orientation. La coquille est alors en appui contre la rondelle d'orientation qui est elle-même en appui contre le second épaulement formé sur la tige de liaison. Cette rondelle d'orientation est typiquement formée par une rondelle ressort.
La rondelle d'orientation est typiquement configurée de manière à permettre un débattement entre la douille et la tige de liaison, de manière à permettre une modification de la concentricité et/ou de la coaxialité entre la douille et la tige de liaison.

Selon un exemple, la coquille est formée de deux portions de coquilles identiques.
Les deux portions de coquille sont typiquement positionnées dans une rainure formée dans la tige de liaison et sont configurées de manière à définir un jeu fonctionnel entre les deux portions de coquilles lorsqu'elles sont montées autour de la tige de liaison.
Ledit jeu fonctionnel est typiquement compris entre 1,5 et 2,5 mm.

Selon un exemple, la portion conique de la base et la portion conique de la coquille forment chacune un angle de 45° par rapport à la direction longitudinale du système de sélection.

L'invention concerne également une machine hydraulique présentant au moins deux cylindrées de fonctionnement, comprenant un système de sélection tel que présenté précédemment.
Le système de sélection est typiquement relié fluidiquement à des conduits d'alimentation de la machine hydraulique d'une part, et à des conduits d'alimentation de pistons de la machine hydraulique d'autre part, de manière à permettre d'alimenter en fluide tout ou partie des pistons de la machine hydraulique.
Le système de sélection est alors typiquement disposé au sein d'un alésage axial de ladite machine hydraulique, ledit alésage comprenant une pluralité de gorges configurées pour relier fluidiquement des conduits d'alimentation de la machine hydraulique vers des sous-ensembles de pistons de la machine hydraulique.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 présente une vue d'ensemble d'un système selon un aspect de l'invention,
- La figure 2 présente une vue détaillée du système d'arrêt axial présenté sur la figure 1,
- Les figures 3 à 9 présentent d'autres vues détaillées du système d'arrêt axial,
- La figure 10 présente une vue détaillée d'un autre mode de réalisation d'un système selon un aspect de la présente invention,
- La figure 11 illustre un exemple d'intégration d'un système selon un aspect de l'invention dans une machine hydraulique.

Sur l'ensemble des figures, les éléments en commun sont repérés par des références numériques identiques.

### DESCRIPTION DETAILLEE

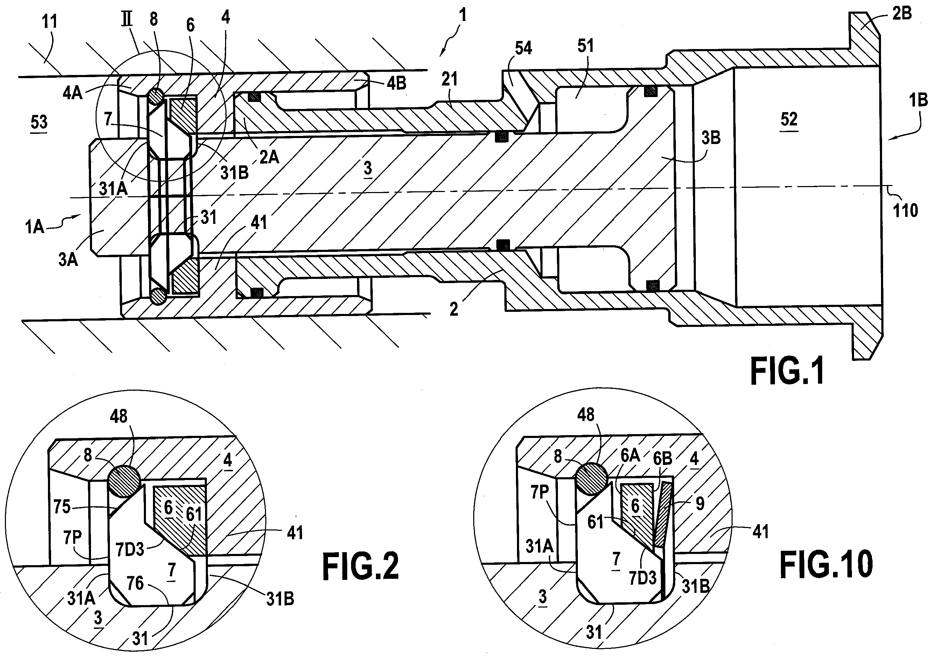

On décrit ici un système selon un aspect de l'invention en référence aux figures 1 à 11.

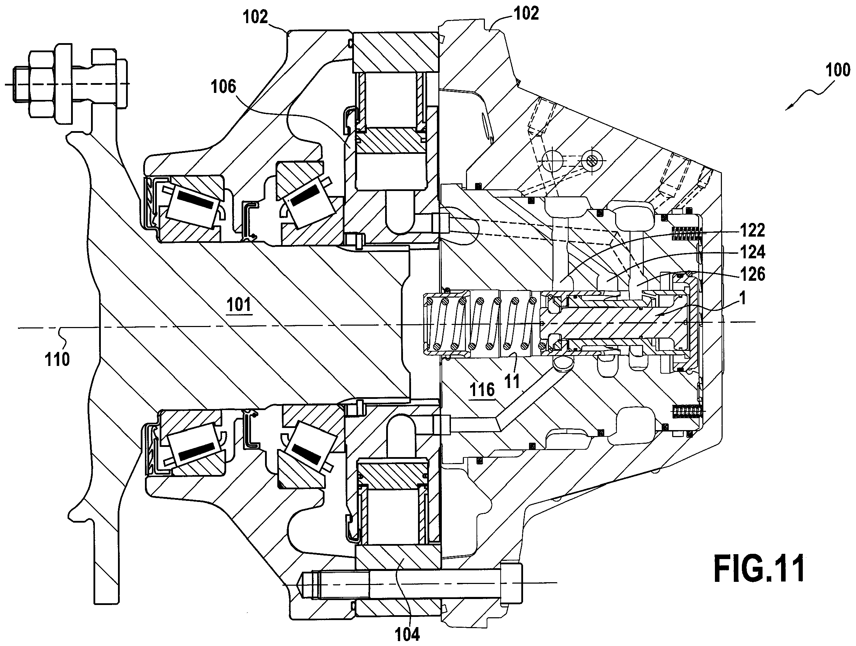

La figure 1 présente une vue d'ensemble d'un système de sélection 1, pouvant notamment être utilisé comme sélecteur de cylindrée ou sélecteur de freinage pour une machine hydraulique. La figure 11 présente un exemple d'intégration d'un tel système de sélection 1 dans une machine hydraulique.

Le système de sélection 1 est typiquement disposé dans un alésage axial 11 réalisé dans une machine hydraulique. A des fins d'illustration, on représente schématiquement un tel alésage axial 11 sur la figure 1.

Cet alésage axial est typiquement réalisé dans un distributeur de machine hydraulique, ou dans le corps de la machine. Le système de sélection est positionné de manière à être connecté hydrauliquement à des orifices d'alimentation de la machine hydraulique et à un système d'ouverture/fermeture du distributeur vers des pistons de la machine hydraulique. Le système de sélection 1 peut être placé, suivant la configuration de la machine hydraulique, dans le corps de la machine hydraulique, par exemple dans un couvercle, ou dans le distributeur de la machine hydraulique. Il peut être placé longitudinalement ou transversalement par rapport à un axe de rotation de la machine hydraulique. L'alésage axial 11 comporte des gorges annulaires non représentées, qui sont reliées directement ou indirectement aux conduits d'alimentation de la machine hydraulique, et aux chambres des pistons de la machine hydraulique, via le distributeur. Ces différents éléments sont bien connus de l'Homme du métier, et ne sont donc pas représentés sur les figures.

Dans l'exemple d'intégration représenté sur la figure 11, on représente le système de sélection dans une machine hydraulique 100 du type à pistons radiaux, comprenant un arbre 101, un carter 102, une came 104, un bloc cylindres 106 qui est monté en rotation relative autour d'un axe 110 par rapport à la came 104 et qui comporte une pluralité de cylindres radiaux.

La machine hydraulique comprend un distributeur interne de fluide 116 qui est solidaire du carter vis-à-vis de la rotation autour de l'axe 110. En d'autres termes, le distributeur interne 116 et la came 104 ne tournent pas l'un par rapport à l'autre. Le distributeur interne 116 est logé à l'intérieur du carter 102, dans une région du carter qui est communément désignée par "couvercle de distribution".
Le distributeur interne 116 comprend un alésage 11 dans lequel est disposé le système de sélection 1. Le distributeur interne 116 comprend plusieurs gorges débouchant radialement dans l'alésage 11, chaque gorge étant reliée à un conduit d'alimentation ou de refoulement de fluide, ou à une chambre du bloc cylindres 106. Dans l'exemple représenté, le distributeur interne 116 comprend trois gorges 122, 124 et 126.

Le système de sélection 1 comprend également un tiroir 2, une tige de liaison 3 et une douille 4. Le tiroir 2 comprend un alésage 21 sur sa périphérie extérieure, permettant de réaliser une connexion fluidique par exemple entre différents conduits d'un distributeur de machine hydraulique.

On définit arbitrairement une extrémité proximale 1A et une extrémité distale 1B du système de sélection 1, et on se référera par la suite à l'extrémité proximale et distale de chaque composant par rapport à l'extrémité proximale 1A et à l'extrémité distale 1B du système de sélection 1.

La tige de liaison 3 est disposée à l'intérieur du tiroir 2, tandis que la douille 4 est solidaire de l'extrémité proximale 3A de la tige de liaison 3 et forme un retour autour de l'extrémité proximale 2A du tiroir 2.

Le système de sélection 1 est commandé via l'application d'efforts au sein d'une chambre proximale 53, d'une chambre intermédiaire 51 et d'une chambre distale 52. Le pilotage d'un tel système de sélection 1 est connu, et ne sera pas décrit de manière exhaustive ici.

Ces efforts peuvent être réalisés au moyen d'éléments de rappel tels que des ressorts ou rondelles, ou via l'application d'une pression (par exemple hydraulique) au sein de la chambre considérée.

A titre d'exemple, la chambre proximale 53 peut être munie d'un ressort exerçant un effort de poussée sur l'ensemble formé par la tige de liaison 3 et la douille 4, tandis qu'une pression de commande est appliquée dans la chambre distale 52 et que la chambre intermédiaire 51 est soumise à une pression égale à celle appliquée dans la gorge externe du tiroir 2, prélevée via un conduit de repiquage 54. En alternative et/ou en complément, un ressort peut être positionné de manière à exercer un effort de poussée sur un épaulement formé ici au niveau de l'extrémité distale 2B du tiroir 2, tendant ainsi à déplacer l'ensemble dans une direction allant de l'extrémité proximale vers l'extrémité distale.
Le ressort agit comme ressort de rappel, et place le tiroir de sélection dans une position par défaut lorsqu'il n'y a pas de pression dans une chambre. Le pilotage des positions du tiroir se fait par des efforts antagonistes entre au moins une des chambre du système de sélection et au moins un ressort.

D'une manière connue, des butées en translation sont prévues sur le tiroir 2, qui coopèrent avec l'environnement du tiroir et de l'alésage 11, de manière à définir une course sur le mouvement du système de sélection 1. D'une manière connue, le mouvement des composants du tiroir de sélection met en relation diverses gorges reliées aux conduites hydrauliques.
En se référant à la figure 11, le mouvement des composants du tiroir de sélection 1 permet de sélectivement mettre en communication fluidique ou d'isoler les gorges 122, 124 et 126 du distributeur interne 116, et ainsi de piloter la cylindrée de la machine hydraulique 100.

Ces efforts exercés dans les chambres 51, 52 et 53 réalisent un pilotage du déplacement de l'ensemble formé par la tige de liaison 3 et la douille 4 et le tiroir 2, et ainsi un pilotage des connections hydrauliques réalisées par te tiroir 2 via ses différentes valeurs de diamètre.

On comprend que la montée en pression au sein de la chambre distale 52 tend à déplacer le système de sélection 1 dans une direction allant de son extrémité distale 1B vers son extrémité proximale 1A, tandis que l'application d'un effort de poussée via un ressort disposé dans la chambre proximale 53 tend à déplacer le système de sélection 1 dans une direction allant de son extrémité proximale 1A vers son extrémité distale 1B.

La douille 4 est solidaire de la tige de liaison 3, via une collerette interne 41 que présente la douille 4, et qui est solidarisée à la périphérie externe de la tige de liaison 3 via des moyens d'arrêt que l'on décrit ci-après.

Les moyens d'arrêt sont représentés en détail sur les figures 2 à 9.
Les moyens d'arrêt comprennent une base 6 et une coquille 7 formée d'au moins deux portions de coquille. Dans l'exemple représenté, la coquille 7 est formée de deux portions de coquille 7A et 7B qui sont ici identiques.

On décrira ci-après dans un premier temps la forme générale de la coquille 7 et sa fonction, puis dans un second temps les portions de coquille la formant.

La base 6 présente une symétrie de révolution. Dans l'exemple illustré, la base 6 forme un anneau dont le diamètre externe est constant formant ainsi une portion externe 62 cylindrique, et comprenant une portion interne dont le diamètre est constant formant ainsi une portion interne 63 cylindrique, et une portion dont le diamètre interne décroit entre une face proximale 6P et une face distale 6D de la base 6, formant ainsi une portion interne 61 conique. La face proximale 6P et la face distale 6D de la base 6 sont typiquement planes.

La coquille 7 est comprise dans une enveloppe présentant également une symétrie de révolution.

La face proximale 7P est plane, typiquement selon un plan perpendiculaire à la direction longitudinale du système de sélection 1 et donc perpendiculaire à l'axe de symétrie de la coquille 7.
La face distale 7D est formée de deux portions planes 7D1 et 7D2 (la portion 7D1 étant ici la portion plane située vers l'extérieur de la coquille 7, et la portion 7D2 étant ici la portion plane située vers l'intérieur de la coquille 7), reliées par une portion inclinée 7D3.
La portion inclinée 7D3 forme ainsi une portion conique de la coquille 7, dont l'inclinaison correspond à l'inclinaison de la portion interne 61 conique de la base 6.
Ainsi, en positionnant la coquille 7 en appui contre la base 6, la portion inclinée 7D3 de la coquille 7 vient en appui plan contre la portion interne 61 conique de la base 6.
La portion interne 61 conique de la base 6 et la portion inclinée 7D3 de la coquille 7 forment typiquement chacune un tronc de cône de révolution incliné d'un angle compris entre 20 et 80° ou entre 30 et 60° par rapport à la génératrice du tronc de cône qui correspond à la direction longitudinale du système de sélection 1, ou encore un angle compris entre 30 et 50° par rapport à la direction longitudinale du système de sélection 1, ou plus précisément de 40° ou 45° par rapport à la direction longitudinale du système de sélection 1.
Dans l'exemple représenté, les arrêtes internes de la coquille 7 sont munies de chanfreins 73 et 74, définissant deux portions internes inclinées respectivement proximale et distale. L'arrête externe proximale de la coquille 7 est également munie d'un chanfrein 75, formant une portion externe proximale inclinée. La face interne 76 de la coquille 7 est quant à elle cylindrique, de diamètre constant. Les chanfreins 73 et 74 permettent de s'assurer que le contact entre la coquille 7 et la rainure 31 est uniquement du type plan ou cylindrique, et que ce contact ne soit pas affecté par des portions arrondies par exemples à la liaison entre le fond de la rainure 31 et ses extrémités 31A et 31B, le fond de la rainure 31 étant la portion cylindrique de la rainure 31 ayant un diamètre interne le plus faible. Les chanfreins 73 et 74 assurent ainsi un bon appui de la coquille 7 sur la tige de liaison 3.

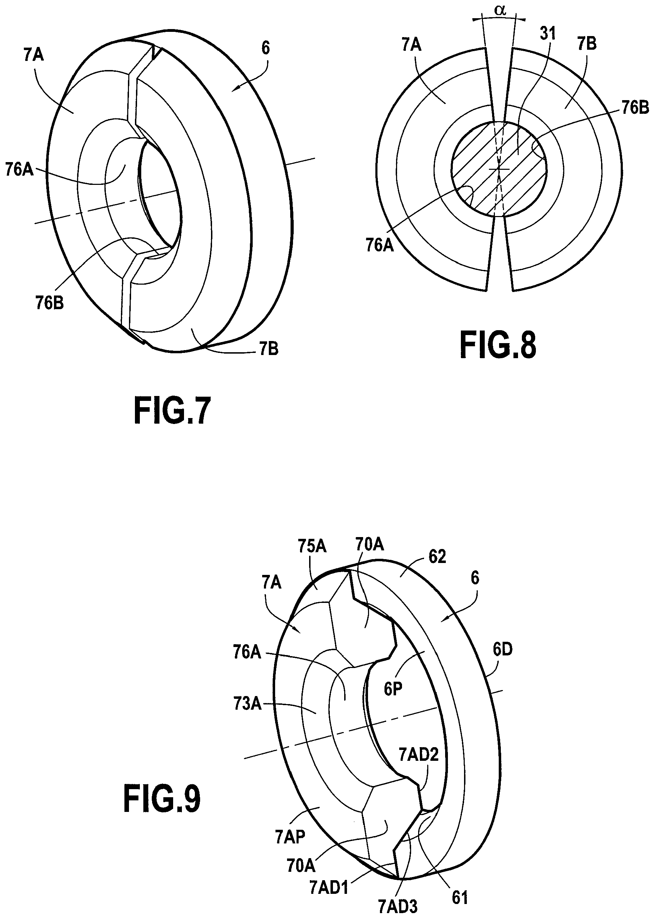

Comme indiqué précédemment, la coquille 7 telle que représentée est formée de deux portions de coquille 7A et 7B ici identiques afin de permettre le montage du système de sélection 1, et plus précisément afin de permettre le positionnement de la coquille 7 autour de la tige de liaison 3, dans la rainure 31. Les portions de coquille peuvent ne pas être identiques, les fonctions décrites ci-après demeurent inchangées.
On décrit ci-après la structure de ces portions de coquilles 7A et 7B en référence aux figures 7 à 9. Les références numériques sont identiques à celles utilisées précédemment pour la description de la coquille 7, mais comprennent la lettre A ou B selon la portion de coquille concernée.

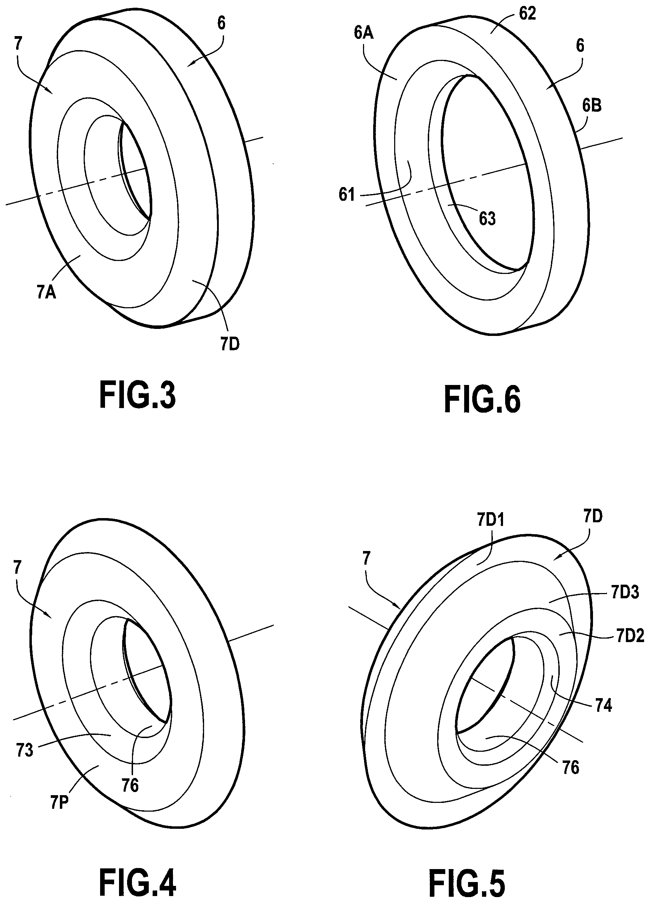

La figure 7 est similaire à la figure 3 décrite précédemment, dans laquelle la coquille 7 est ici formée de deux portions de coquilles 7A et 7B.

Les portions de coquille 7A et 7B sont donc configurées de manière à venir en appui plan contre la base 6, l'appui étant réalisé via les portions inclinées 7AD3 et 7BD3 des portions de coquille 7A et 7B sur la portion interne 61 de la base 6, comme visible sur la figure 9.

Les deux portions de coquille 7A et 7B présentent chacune deux faces repérées par la référence numérique 70 en vis-à-vis avec l'autre portion de coquille.
Dans l'exemple représenté, chacune des faces 70 s'étend radialement selon un plan parallèle à et comprenant l'axe de symétrie de révolution de la coquille 7.
Un jeu fonctionnel existe, typiquement de l'ordre de 1,5 à 2,5 mm, ou plus précisément de l'ordre de 2mm entre les deux portions de coquilles 7 lorsqu'elles sont assemblées en position de montage sur la rainure 31 de la tige de liaison 3, comme représenté sur la figure 8.
Plus précisément, lorsque les portions de coquille 7A et 7B sont assemblées en position de montage sur la rainure 31 de la tige de liaison 3, les portions de coquille 7A et 7B ne s'étendent pas de manière continue autour de la tige de liaison ; il existe donc un jeu fonctionnel entre les deux portions de coquilles 7A et 7B.

Un tel jeu fonctionnel permet de s'assurer que les deux portions de coquilles se mettent en appui sur la tige de liaison 3, par l'application des faces internes 76A et 76B des portions de coquilles 7A et 7B sur le fond de rainure 31 lors de l'application d'un effort sur la tige 3, ce qui permet de garantir la perpendicularité des portions de coquilles par rapport à l'axe longitudinal de la tige de liaison 3, et donc de garantir l'alignement des portions de coquilles 7 par rapport à la base 6, et également le contact entre les portions de coquilles 7A et 7B et la base 6 via la surface conique définie par la face 7AD3 et 7BD3 des portions de coquilles 7A et 7B .

On représente ainsi schématiquement sur la figure 8 les portions de coquilles 7A et 7B montées autour de la rainure 31 de la tige de liaison 3.

Comme on le voit sur cette figure, les portions de coquille 7A et 7B ne sont pas en contact continu tout autour du fond de de la rainure 31 de la tige de liaison 3.
Afin de s'assurer de la formation d'un tel jeu fonctionnel, les portions de coquilles et la rainure 31 de la tige de liaison 3 sont configurées de sorte que la longueur cumulée des faces internes 76A et 76B des portions de coquille 7A et 7B soit strictement inférieure à la valeur minimale du périmètre externe du fond de la rainure 31, c'est à dire strictement inférieure à la valeur minimale du périmètre externe de la partie de la rainure 31 contre laquelle les faces internes 76A et 76B des portions de coquille 7A et 7B viennent en appui.
De cette manière, les portions de coquille 7A et 7B n'entourent pas totalement le fond de la rainure 31, ce qui entraine un jeu entre au moins deux faces 70 adjacentes des portions de coquille 7A et 7B. Le fond de la rainure 31 n'est donc pas en contact sur la totalité de son périmètre (ou de sa circonférence) avec les faces internes 76A et 76 B des portions de coquille.
Ce jeu fonctionnel est typiquement compris entre 1,5 et 2,5 mm.
Formulé différemment, lorsque les portions de coquille sont montées autour de la rainure 31, il existe au moins un secteur angulaire α (alpha) autour du fond de la rainure 31 non occupé par une portion de coquille. Ou, il existe au moins un secteur angulaire du fond de la rainure 31 non en contact avec au moins une des portions de coquille 7A et 7B.

Les portions de coquille 7A et 7B peuvent être formées individuellement et sont alors dimensionnées de manière à définir un jeu fonctionnel tel que défini précédemment, ou par découpe d'une coquille dont la côte est initialement ajustée sur la côte de la rainure 31, cette découpe entrainant un retrait de matière réduisant ainsi la longueur cumulée des faces internes 76 des portions de coquille et formant ainsi le jeu fonctionnel tel que mentionné précédemment.

La coquille 7 peut être composée de plus de deux portions, par exemple de 3 ou 4 portions.

Les moyens d'arrêt 6 et 7 sont disposés entre la tige de liaison 3 et la douille 4. Une rainure 31 est réalisée dans la tige de liaison 3 de manière à former un logement pour recevoir les moyens d'arrêt.
La coquille 7 est positionnée dans la rainure 31, et vient en butée contre une extrémité de la rainure 31, ici l'extrémité proximale 31A de la rainure 31 via sa face proximale 7P plane.
La face interne 76 cylindrique de la coquille 7 vient au contact d'un fond plan de la rainure 31.
La base 6 est montée en appui contre la coquille 7, de sorte que la portion inclinée 7D3 de la coquille 7 soit en appui contre la portion interne 61 conique de la base 6. La base 6 est en appui via sa face distale 6D contre la collerette interne 41 de la douille 4, le contact est donc un contact entre deux faces planes.

La coquille 7 est donc en appui plan contre la tige de liaison 3 et contre la base 6, cette dernière étant en appui plan contre la coquille 7 et la douille 4. La transmission d'un effort entre la douille 4 et la tige de liaison 3 est donc réalisée via des appuis plans, notamment grâce au contact conique entre la coquille 7 et la base 6 via leurs faces inclinées. On note qu'un montage inverse est également possible, la base 6 étant alors en appui plan contre la tige de liaison 3 et la coquille 7, et la coquille 7 étant en appui plan contre la base 6 et la douille 4.
Cette transmission via un appui plan via des faces inclinées par rapport à la direction longitudinale du système de sélection 1 entraine un effort entre ces deux éléments incliné par rapport à la direction longitudinale du système de sélection 1. Cet effort a donc une composante axiale et une composante radiale.

La composante radiale de cet effort tend à resserrer la coquille 7 sur la tige de liaison 3, et ainsi à supprimer le jeu pouvant subsister sur la tige de liaison 3, ce qui permet d'éviter que la coquille 7 ne soit désaxée, ou ne soit pas perpendiculaire à l'axe longitudinal de la tige 3, et d'éviter une concentration d'efforts sur trois points. La contrainte en flexion de la coquille 7 est ainsi supprimée, et la coquille 7 présente donc une résistance accrue à l'effort par rapport à des moyens d'arrêt conventionnels qui conduisent à des contacts ponctuels lors de l'application d'efforts.

Dans l'exemple illustré, un jonc d'arrêt 8 est disposé dans une rainure 48 aménagée dans la douille 4. Le jonc d'arrêt 8 vient ici en appui contre le chanfrein 75 de la coquille 7, et permet un maintien des différentes pièces pour en faciliter le montage et le transport.

La figure 10 présente une variante du mode de réalisation déjà présenté en référence aux figures 1 à 9.

Dans cette variante, une rondelle ressort 9 est intercalée entre la base 6 et la douille 4, plus précisément entre collerette interne 41 de la douille 4 la face distale 6D de la base 6. Comme on le verra par la suite, cette rondelle ressort 9 a une fonction d'orientation ; on pourra également la qualifier de rondelle d'orientation 9.

La rondelle ressort 9 est typiquement une rondelle ressort conique.

Du fait de la présence de la rondelle ressort 9, cette variante autorise un débattement entre la douille 4 et la tige de liaison 3, et permet ainsi d'en moduler la concentricité et la coaxialité.
Plus précisément, la déformation de la rondelle ressort 9 permet un léger débattement entre la douille et la tige de liaison 3, ce qui permet ainsi de faciliter le coulissement de la tige de liaison 3 par rapport au tiroir 2, et notamment permet de réduire les risques de blocage du coulissement lorsque le système de sélection 1 coulisse dans l'alésage 11 et les gorges associées.

On comprend que même en présence d'une telle rondelle ressort 9, le contact entre la coquille 7 et la base 6 demeure un contact via deux surfaces planes. Seul le contact entre la base 6 et la douille 4 est modifié.

Tout comme pour le mode de réalisation de la figure 2, le montage peut ici également être inversé ; la base 6 étant alors en appui plan contre la tige de liaison 3 et la coquille 7, et la coquille 7 étant en appui plan contre la base 6 et contre la douille 4 par l'intermédiaire de la rondelle ressort 9.

La rondelle ressort 9 peut également être positionné en appui contre la tige de liaison 3 et l'un ou l'autre de la base 6 ou de la coquille 7, le fonctionnement demeurant inchangé.

On comprend que ce mode de réalisation peut également être appliqué à la variante représentée sur la figure 10, la rondelle ressort 9 étant alors interposée entre la coquille 7 et la collerette interne 41 de la douille 4. La fonction est alors identique à celle décrite précédemment.

## Revendications

1. Système de sélection (1), comprenant
- une douille (4) définissant un logement interne s'étendant selon une direction longitudinale,
- une tige de liaison (3) disposée dans ledit logement interne, et s'étendant selon la direction longitudinale,
- un tiroir (2) de sélection monté coulissant dans le logement interne, autour de la tige de liaison (3),
la tige de liaison (3) étant montée fixe en translation selon la direction longitudinale par rapport à la douille (4) via des moyens d'arrêt (6, 7), **caractérisé en ce que** les moyens d'arrêt (6, 7) comprennent
- une base (6) présentant une symétrie de révolution et comprenant une portion conique (61),
- une coquille (7) comprenant deux portions de coquille comprenant chacune une portion conique (7D3) configurée pour venir en appui plan contre la portion conique (61) de la base (6).

2. Système de sélection (1) selon la revendication 1, dans lequel la base (6) forme un anneau dont une face interne (61) est biseautée de manière à former la portion conique, la portion conique (7D3) de la coquille (7) étant adaptée pour venir en appui plan contre ladite portion conique (61) de la base (6).

3. Système de sélection (1) selon l'une des revendications 1 à 2, dans lequel la base (6) est en appui contre un premier épaulement (41, 31A) formé sur l'une parmi la tige de liaison (3) et la douille (4), et la coquille (7) est en appui contre un second épaulement (31A, 41) formé sur l'autre parmi la tige de liaison (3) et la douille (4).

4. Système de sélection (1) selon l'une des revendications 1 ou 2, comprenant en outre une rondelle d'orientation (9), et dans lequel la base (6) est en appui contre un premier épaulement formé sur l'une parmi la tige de liaison (3) et la douille (4), et la coquille (7) est en appui contre la rondelle d'orientation (9) qui est elle-même en appui contre un second épaulement formé sur l'autre parmi la tige de liaison (3) et la douille (4).

5. Système de sélection (1) selon la revendication 4, dans lequel la rondelle d'orientation (9) est une rondelle ressort configurée de manière à permettre un débattement entre la douille (4) et la tige de liaison (3), de manière à permettre une modification de la concentricité et/ou de la coaxialité entre la douille (4) et la tige de liaison (3).

6. Système de sélection (1) selon l'une des revendications 1 à 5, dans lequel la coquille (7) est formée de deux portions de coquille.

7. Système de sélection (1) selon la revendication 6, dans lequel les deux portions de coquille sont positionnées dans une rainure (21) formée dans la tige de liaison (3), et sont configurées de manière à définir un jeu fonctionnel entre les deux portions de coquilles (7A, 7B) lorsqu'elles sont montées autour de la tige de liaison (3).

8. Système de sélection (1) selon la revendication 7, dans lequel ledit jeu fonctionnel est compris entre 1,5 et 2,5 mm.

9. Système de sélection (1) selon l'une des revendications 1 à 8, dans lequel la portion conique (61) de la base (6) et la portion conique (7D3) de la coquille (7) forment chacune un angle compris entre 20 et 80° par rapport à la direction longitudinale du système de sélection (1).

10. Machine hydraulique présentant au moins deux cylindrées de fonctionnement, comprenant un système de sélection (1) selon l'une des revendications 1 à 9.

11. Machine hydraulique selon la revendication 10, dans laquelle le système de sélection (1) est relié fluidiquement à des conduits d'alimentation de la machine hydraulique d'une part, et à des conduits d'alimentation de pistons de la machine hydraulique d'autre part.

12. Machine hydraulique selon la revendication 11, dans laquelle le système de sélection (1) est disposé au sein d'un alésage axial (11) de ladite machine hydraulique, ledit alésage (11) comprenant une pluralité de gorges configurées pour relier fluidiquement des conduits d'alimentation de la machine hydraulique vers des sous-ensembles de pistons de la machine hydraulique.

## Patentansprüche

1. Auswahlsystem (1), umfassend
- eine Hülse (4), die eine innere Aufnahme definiert, die sich gemäß einer Längsrichtung erstreckt,
- eine Verbindungsstange (3), die in der inneren Aufnahme angeordnet ist, und sich gemäß der Längsrichtung erstreckt,
- einen Auswahlschieber (2), der gleitend in der inneren Aufnahme um die Verbindungsstange (3) montiert ist,
wobei die Verbindungsstange (3) in Bezug auf die Hülse (4) über Anschlagmittel (6, 7) fest gemäß der Längsrichtung verschiebbar montiert ist, **dadurch gekennzeichnet, dass** die Anschlagmittel (6, 7) umfassen
- eine Basis (6), die eine Umdrehungssymmetrie aufweist und einen konischen Abschnitt (61) umfasst,
- ein Gehäuse (7), das zwei Gehäuseabschnitte umfasst, die jeweils einen konischen Abschnitt (7D3) umfassen, der ausgestaltet ist, um eben an dem konischen Abschnitt (61) der Basis (6) aufzuliegen.

2. Auswahlsystem (1) nach Anspruch 1, wobei die Basis (6) einen Ring bildet, von dem eine Innenfläche (61) abgeschrägt ist, um den konischen Abschnitt zu bilden, wobei der konische Abschnitt (7D3) des Gehäuses (7) angepasst ist, um eben an dem konischen Abschnitt (61) der Basis (6) aufzuliegen.

3. Auswahlsystem (1) nach einem der Ansprüche 1 bis 2, wobei die Basis (6) an einer ersten Schulter (41, 31A) aufliegt, die an einer von der Verbindungsstange (3) und der Hülse (4) gebildet wird, und das Gehäuse (7) an einer zweiten Schulter (31A, 41) aufliegt, die an der anderen von der Verbindungsstange (3) und der Hülse (4) gebildet wird.

4. Auswahlsystem (1) nach einem der Ansprüche 1 oder 2, das ferner eine Ausrichtungsscheibe (9) umfasst, und wobei die Basis (6) an einer ersten Schulter aufliegt, die an einer von der Verbindungsstange (3) und der Hülse (4) gebildet wird, und das Gehäuse (7) an der Ausrichtungsscheibe (9) aufliegt, die selbst an einer zweiten Schulter aufliegt, die an der anderen von der Verbindungsstange (3) und der Hülse (4) gebildet wird.

5. Auswahlsystem (1) nach Anspruch 4, wobei die Ausrichtungsscheibe (9) ein Federring ist, der ausgestaltet ist, um einen Federweg zwischen der Hülse (4) und der Verbindungsstange (3) zu erlauben, um eine Modifikation der Konzentrizität und/oder der Koaxialität zwischen der Hülse (4) und der Verbindungsstange (3) zu erlauben.

6. Auswahlsystem (1) nach einem der Ansprüche 1 bis 5, wobei das Gehäuse (7) aus zwei Gehäuseabschnitten gebildet ist.

7. Auswahlsystem (1) nach Anspruch 6, wobei die zwei Gehäuseabschnitte in einer Nut (21) positioniert sind, die in der Verbindungsstange (3) gebildet ist, und ausgestaltet sind, um ein funktionelles Spiel zwischen den zwei Gehäuseabschnitten (7A, 7B) zu definieren, wenn sie um die Verbindungsstange (3) montiert sind.

8. Auswahlsystem (1) nach Anspruch 7, wobei das funktionelle Spiel zwischen 1,5 und 2,5 mm liegt.

9. Auswahlsystem (1) nach einem der Ansprüche 1 bis 8, wobei der konische Abschnitt (61) der Basis (6) und der konische Abschnitt (7D3) des Gehäuses (7) in Bezug auf die Längsrichtung des Auswahlsystems (1) jeweils einen Winkel zwischen 20 und 80° bilden.

10. Hydraulische Maschine, die mindestens zwei Funktionshubräume aufweist, die ein Auswahlsystem (1) nach einem der Ansprüche 1 bis 9 umfassen.

11. Hydraulische Maschine nach Anspruch 10, wobei das Auswahlsystem (1) fluidisch mit Versorgungsleitungen der hydraulischen Maschine einerseits und mit Versorgungsleitungen von Kolben der hydraulischen Maschine andererseits verbunden ist.

12. Hydraulische Maschine nach Anspruch 11, wobei das Auswahlsystem (1) innerhalb einer axialen Bohrung (11) der hydraulischen Maschine angeordnet ist, wobei die Bohrung (11) mehrere Rillen umfasst, die ausgestaltet sind, um Versorgungsleitungen der hydraulischen Maschine fluidisch mit Untereinheiten von Kolben der hydraulischen Maschine zu verbinden.

## Claims

1. A selection system (1), comprising:
• a sheath (4) defining an internal housing extending in a longitudinal direction;
• a link rod (3) disposed in said internal housing, and extending in the longitudinal direction; and
• a selection slide (2) mounted to slide in the internal housing, about the link rod (3);
the link rod (3) being held stationary relative to the sheath (4) against movement in translation in the longitudinal direction by stop means (6, 7);
the system being **characterized in that** the stop means (6, 7) comprise:
• a base (6) that is a body of revolution and includes a conical portion (61); and
• a shell (7) comprising two shell portions each including a conical portion (7D3) configured to come to bear in plane manner against the conical portion (61) of the base (6).

2. A selection system (1) according to claim 1, wherein the base (6) forms a ring having an inside face (61) that tapers in such a manner as to form the conical portion, the conical portion (7D3) of the shell (7) being adapted to come to bear in plane manner against said conical portion (61) of the base (6).

3. A selection system (1) according to claim 1 or claim 2, wherein the base (6) bears against a first shoulder (41, 31A) formed on one item selected from the link rod (3) and the sheath (4), and the shell (7) bears against a second shoulder (31A, 41) formed on the other item selected from the link rod (3) and the sheath (4).

4. A selection system (1) according to claim 1 or claim 2, further comprising a guide washer (9), and wherein the base (6) bears against a first shoulder formed on one item selected from the link rod (3) and the sheath (4), and the shell (7) bears against the guide washer (9), which itself bears against a second shoulder formed on the other item selected from the link rod (3) and the sheath (4).

5. A selection system (1) according to claim 4, wherein the guide washer (9) is a spring washer configured in such a manner as to enable movement between the sheath (4) and the link rod (3), in such a manner as to enable the concentricity and/or the coaxiality between the sheath (4) and the link rod (3) to be modified.

6. A selection system (1) according to any one of claims 1 to 5, wherein the shell (7) is made up of two shell portions.

7. A selection system (1) according to claim 6, wherein the two shell portions are positioned in a groove (21) formed in the link rod (3), and are configured in such a manner as to define a functional clearance between the two shell portions (7A, 7B) when they are mounted about the link rod (3).

8. A selection system (1) according to claim 7, wherein said functional clearance lies in the range 1.5 mm to 2.5 mm.

9. A selection system (1) according to any one of claims 1 to 8, wherein each of the conical portion (61) of the base (6) and the conical portion (7D3) of the shell (7) forms an angle lying in the range 20° to 80° relative to the longitudinal direction of the selection system (1).

10. A hydraulic machine presenting at least two operating cylinder capacities, including a selection system (1) according to any one of claims 1 to 9.

11. A hydraulic machine according to claim 10, wherein the selection system (1) is in fluid flow connection firstly with feed pipes for feeding the hydraulic machine, and secondly with feed pipes for feeding pistons of the hydraulic machine.

12. A hydraulic machine according to claim 11, wherein the selection system (1) is disposed in an axial bore (11) of said hydraulic machine, said bore (11) including a plurality of ducts configured to be in fluid flow connection with feed pipes for of the hydraulic machine for feeding subsets of pistons of the hydraulic machine.
